# EUROPEAN PATENT SPECIFICATION

(11) **EP 4 145 066 B1**
(45) Date of publication and mention of the grant of the patent: **29.01.2025**
(21) Application number: 22192314.7
(22) Date of filing: 26.08.2022
(51) Int. Cl.: F25B 41/335

(54) **METHOD FOR MANUFACTURING POWER ELEMENT, POWER ELEMENT, AND EXPANSION VALVE EQUIPPED WITH THE SAME**
VERFAHREN ZUR HERSTELLUNG EINES LEISTUNGSELEMENTS, LEISTUNGSELEMENT UND MIT DEMSELBEN AUSGESTATTETES EXPANSIONSVENTIL
PROCÉDÉ DE FABRICATION D'UN ÉLÉMENT DE PUISSANCE, ÉLÉMENT DE PUISSANCE, ET SOUPAPE DE DÉTENTE ÉQUIPÉE DE CELUI-CI

(30) Priority: 06.09.2021 JP 2021145007
(43) Date of publication of application: 08.03.2023
(73) Proprietor: Fujikoki Corporation, Tokyo 158-0082 (JP)
(72) Inventor: OKUTSU, Kinya, Tokyo, 158-0082 (JP); MATSUDA, Ryo, Tokyo, 158-0082 (JP); KAMATA, Naoki, Tokyo, 158-0082 (JP)
(74) Representative: Ter Meer Steinmeister & Partner

(56) References cited:
- JP-A- H02 254 270
- US-A- 3 388 864
- US-A- 6 112 998
- US-B2- 6 543 672

## Description

### [Technical Field]

The present invention relates to a method for manufacturing a power element, a power element, and an expansion valve equipped with the same.

### [Background Art]

Heretofore, refrigeration cycles used in air conditioning devices installed in automobiles and the like include a thermosensitive expansion valve that controls an amount of flow of refrigerant according to temperature.

For example, Patent Literature 1 discloses an expansion valve including an inlet port through which a high-pressure refrigerant is introduced, a valve chamber communicated with the inlet port, and a valve member drive mechanism called a power element arranged at a top portion of a valve body. A spherical valve element arranged within the valve chamber opposes a valve seat opening in the valve chamber, which is operated by a working rod driven by the power element and controls an opening degree of a throttle passage formed between the valve element and the valve seat. Similar valves using a power element are described in Patent Literature 2 to 5.

Patent Literature 2 discloses a method for manufacturing a power element for a thermal expansion valve including an upper lid member, a receiving member, and a diaphragm interposed between the upper lid member and the receiving member; wherein during a step of charging a working gas is filled in the area between the upper lid and the diaphragm via a single filling hole which is subsequently filled with melted material. Patent Literature 2 also discloses a power element according to the preamble of claim 4.

The power element is composed of an upper lid member that constitutes a pressure working chamber, a diaphragm formed of a thin plate that elastically deforms by receiving pressure, and a receiving member fixed to a valve main body. Further, a working gas is sealed in the pressure working chamber formed of the upper lid member and the diaphragm. Moreover, a stopper member is arranged in a lower space defined by the diaphragm and the receiving member.

According to such a power element, when heat transfer is performed between a refrigerant flowing into the lower space from the valve main body and the working gas charged in the pressure working chamber, an inner pressure of the pressure working chamber is relatively increased thereby and the diaphragm deforms in a manner expanding the pressure working chamber, such that pressure is applied to a stopper member that presses the working rod, according to which the valve element is moved away from the valve seat. Meanwhile, if the inner pressure of the pressure working chamber is relatively lowered, the diaphragm returns from the deformed state and the pressure pressing the working rod is lost, such that the valve element is seated on the valve seat.

### [Citation List]

### [Patent Literature]

[PTL 1] Publication of Japanese Patent No. 3207716
[PTL 2] Japanese Patent Application No. JP H02 254270 A
[PTL 3] United States Patent Application No. US 6 11 2 998 A
[PTL 4] United States Patent Document No. US 6 543 672 B2
[PTL 5] United States Patent Application No. US 3 388 864 A

### [Summary of Invention]

### [Technical Problem]

In general expansion valves, after charging a working gas through a center holeformed at a top portion of the upper lid member, a plug member is sealed onto the center hole by projection welding and the like to prevent leakage of the working gas. Further, the area surrounding the center hole is formed as a tapered surface that is gradually inclined downward toward the center, with the aim to facilitate welding of the plug member. Therefore, water may be pooled on the tapered surface in the area surrounding the plug member after the plug member has been welded onto the center hole. According to the expansion valve disclosed in Patent Literature 1, an anticorrosion material such as an adhesive is injected to fill the tapered surface surrounding the plug member, to thereby cover the area surrounding the welded portion of the plug member by the anticorrosion material such that water is prevented from being pooled in that area.

According to the technique, however, since the plug member is welded to the upper lid member, the number of components is increased, and stress corrosion cracking may be caused by residual stress. Further, since anticorrosion material is filled in the area surrounding the plug member, not only the manufacturing costs of the expansion valve but also the weight of the expansion valve are increased.

In consideration of the above problems, an object of the present invention aims is to provide a method for manufacturing a power element, a power element, and an expansion valve equipped with the power element that enables to reduce the number of components and the weight of the expansion valve, and that is easily manufactured.

### [Solution to Problem]

In order to achieve the objects mentioned above, a method for manufacturing a power element according to the present invention is defined in claim 1.

Further, the power element according to the present invention is defined in claim 4.

### [Advantageous Effects of Invention]

The present invention enables to provide a method for manufacturing a power element, a power element, and an expansion valve equipped with the same, wherein the number of components of the power element and the weight thereof can be cut down, and wherein the power element can be manufactured easily.

### [Brief Description of Drawings]

[FIG. 1] FIG. 1 is a schematic cross-sectional view illustrating an example in which an expansion valve not according to the invention is applied to a refrigerant circulation system.
[FIG. 2] FIG. 2 is a cross-sectional view illustrating a part of a manufacturing process of a power element not according to the invention.
[FIG. 3A] FIG. 3A is an enlarged plan view of a top portion of the power element not according to the invention, illustrating a state immediately prior to welding.
[FIG. 3B] FIG. 3B is an enlarged plan view of a top portion of a power element according to a modified example not according to the invention, illustrating a state immediately prior to welding.
[FIG. 3C] FIG. 3C is an enlarged plan view of a top portion of a power element according to another modified example not according to the invention, illustrating a state immediately prior to welding.
[FIG. 4] FIG. 4 is a cross-sectional view illustrating a part of a manufacturing process of a power element according to a second embodiment not according to the invention.
[FIG. 5] FIG. 5 is a cross-sectional view illustrating a part of a manufacturing process of a power element according to a third embodiment not according to the invention.
[FIG. 6A] FIG. 6A is an enlarged plan view of a top portion of a power element according to a modified example not according to the invention, illustrating a state immediately prior to welding.
[FIG. 6B] FIG. 6B is an enlarged plan view of a top portion of a power element according to the invention, illustrating a state immediately prior to welding.
[FIG. 7] FIG. 7 is a cross-sectional view illustrating a part of a manufacturing process of a power element according to a fourth embodiment not according to the invention.
[FIG. 8] FIG. 8 is a cross-sectional view illustrating a part of a manufacturing process of a power element according to a fifth embodiment not according to the invention.
[FIG. 9] FIG. 9 is a cross-sectional view illustrating a part of a manufacturing process of a power element according to a sixth embodiment not according to the invention.
[FIG. 10] FIG. 10 is a cross-sectional view illustrating a part of a manufacturing process of a power element according to a seventh embodiment not according to the invention.

### [Description of Embodiments]

Embodiments of the present invention will be described below with reference to the drawings.

### (Definition of Direction)

In the present specification, a direction from a valve element 3 toward a working rod 5 is defined as an "upper direction", and a direction from the working rod 5 toward the valve element 3 is defined as a "lower direction". Therefore, in the present specification, regardless of the orientation of an expansion valve 1, a direction from the valve element 3 toward the working rod 5 is referred to as the "upper direction".

### (First Embodiment)

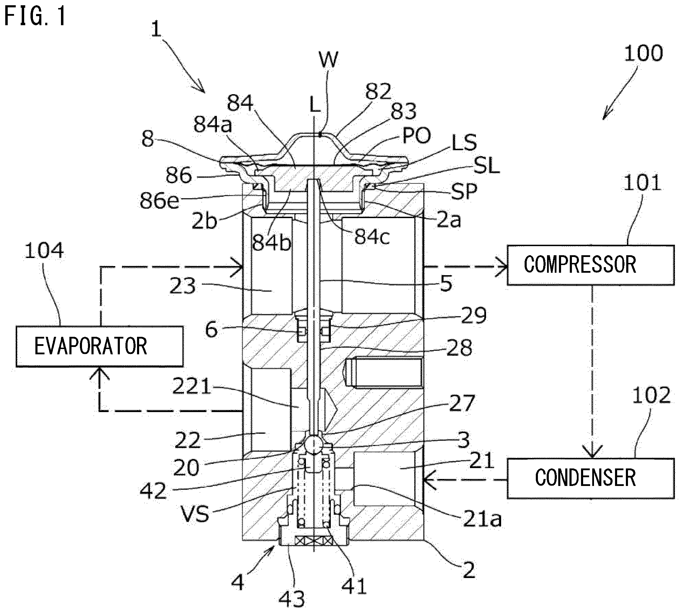

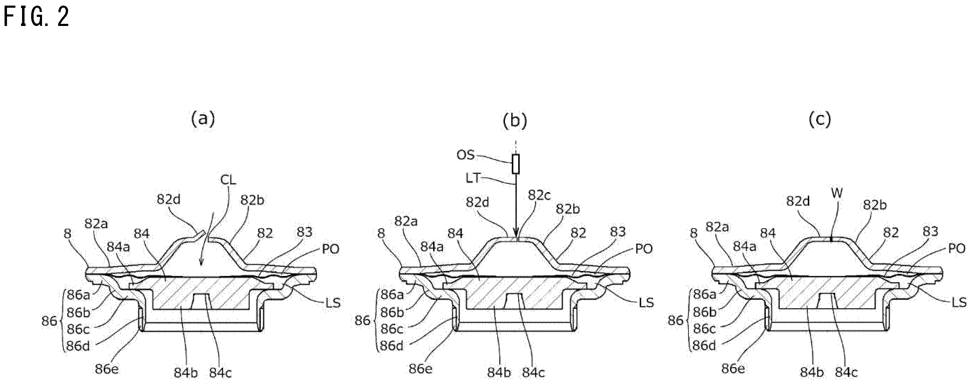

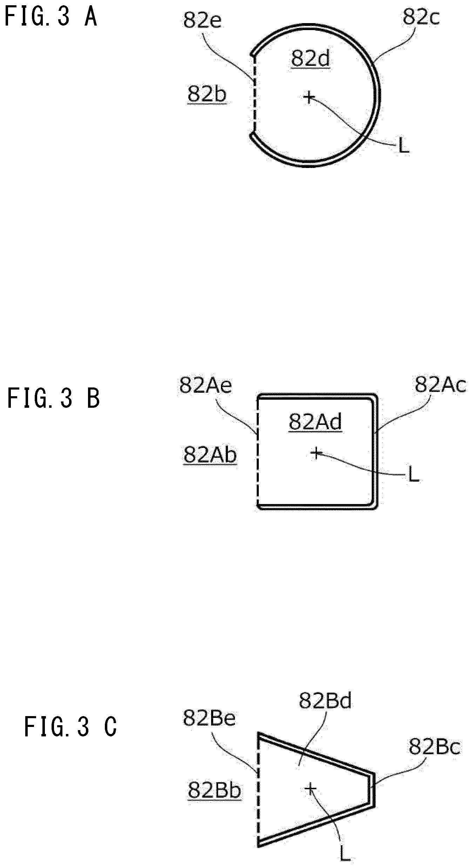

A general configuration of the expansion valve 1 according to the present embodiment will be described with reference to FIGs. 1 and 2. FIG. 1 is a schematic cross-sectional view illustrating the expansion valve 1 according to the present embodiment applied to a refrigerant circulation system 100. FIG. 2 is a cross-sectional view illustrating a part of a manufacturing process of a power element 8 according to the present embodiment. FIG. 3A is a plan view illustrating a top portion of the power element 8 according to the present embodiment in enlarged view, wherein a state immediately prior to welding is illustrated.

In the present embodiment, the expansion valve 1 is in fluid connection with a compressor 101, a condenser 102, and an evaporator 104. An axis of the expansion valve 1 and the power element 8 is denoted as L.

In FIG. 1, the expansion valve 1 includes a valve main body 2 equipped with a valve chamber VS, the valve element 3, an urging device 4, the working rod 5, and the power element 8.

In addition to the valve chamber VS, the valve main body 2 includes a first flow path 21, a second flow path 22, an intermediate chamber 221, and a return flow path 23. The first flow path 21 is a feed-side flow path, and refrigerant, also referred to as fluid, is supplied to the valve chamber VS via the feed-side flow path. The second flow path 22 is a discharge-side flow path, also referred to as an outlet port-side flow path, and the fluid within the valve chamber VS is discharged through a valve communication hole 27, the intermediate chamber 221, and the discharge-side flow path to the exterior of the expansion valve.

The first flow path 21 and the valve chamber VS are communicated through a connection path 21a that has a smaller diameter than the first flow path 21. The valve chamber VS and the intermediate chamber 221 are communicated via a valve seat 20 and the valve communication hole 27.

A working rod insertion hole 28 formed above the intermediate chamber 221 has a function to guide the working rod 5, and an annular recess 29 formed above the working rod insertion hole 28 has a function to accommodate a ring spring 6. The ring spring 6 applies a predetermined urging force by having a plurality of spring pieces abut against an outer circumference of the working rod 5.

The valve element 3 is arranged within the valve chamber VS. When the valve element 3 is seated on the valve seat 20 of the valve main body 2, the flow of refrigerant through the valve communication hole 27 is restricted. This state is referred to as a non-communicated state. However, even if the valve element 3 is seated on the valve seat 20, it may be possible to allow a limited amount refrigerant to flow through. Meanwhile, in a state where the valve element 3 is left from the valve seat 20, the flow of refrigerant passing through the valve communication hole 27 is increased. This state is referred to as a communicated state.

The working rod 5 is inserted to the valve communication hole 27 with a predetermined clearance formed therebetween. A lower end of the working rod 5 is in contact with an upper surface of the valve element 3. An upper end of the working rod 5 is fit to a fitting hole 84c of a stopper member 84 described later.

The working rod 5 can press the valve element 3 against the urging force of the urging device 4 toward a direction in which the valve is opened. In a state where the working rod 5 is moved toward the lower direction, the valve element 3 is left from the valve seat 20 and the expansion valve 1 is opened.

The urging device 4 includes a coil spring 41 formed by spirally winding a wire having a circular cross-sectional shape, a valve element support 42, and a spring receiving member 43.

The valve element support 42 is attached to an upper end of the coil spring 41, and the valve element 3 having a spherical shape is welded to an upper surface thereof such that the valve element support 42 and the valve element 3 are integrated.

The spring receiving member 43 that supports a lower end of the coil spring 41 can be screwed onto the valve main body 2, and it has a function to seal the valve chamber VS and a function to adjust the urging force of the coil spring 41.

Next, the power element 8 will be described. As illustrated in FIG. 2, the power element 8 includes an upper lid member 82, a diaphragm 83, a receiving member 86, and the stopper member 84.

As illustrated in FIG. 2, the upper lid member 82 includes a flange portion 82a arranged on an outer circumference, and a truncated cone-shaped portion 82b arranged at a center. Prior to assembly, in the state illustrated in FIG. 3A, a slit 82c having an arc-shape, that is, C-shape when viewed in an axial direction of the expansion valve, that extends for an angle of approximately 300 degrees around a circumference of an axis L is formed on a flat center portion of the truncated cone-shaped portion 82b, and a circular tab 82d is formed at a center surrounded by the slit 82c. The tab 82d is connected to the truncated cone-shaped portion 82b via an end edge 82e illustrated by a dotted line that connects both ends of the slit 82c linearly, and in the state prior to assembly, the tab 82d is in an erected state folded up at the end edge 82e with respect to the truncated cone-shaped portion 82b.

The diaphragm 83 is formed of a plate made of a thin metal material, such as SUS, on which multiple concentric circles of concave-convex shapes are formed, and has an outer diameter that is approximately equal to the outer diameters of the upper lid member 82 and the receiving member 86.

The receiving member 86 includes a first annular flange portion 86a having an outer diameter that is approximately equal to the outer diameter of the upper lid member 82, a first cylindrical portion 86b formed continuously to an inner circumference of the first annular flange portion 86a, a second annular flange portion 86c formed continuously to the lower end of the first cylindrical portion 86b toward the inner side in the radial direction, and a second cylindrical portion 86d formed continuously to an inner circumference of the second annular flange portion 86c. A male screw portion 86e is formed at an outer circumference on a lower end of the second cylindrical portion 86d.

The stopper member 84 is formed by connecting an upper flange portion 84a opposed to the diaphragm 83 and a main body 84b having a solid cylindrical shape. A fitting hole 84c is formed at the center of the lower end of the main body 84b.

A method for manufacturing the upper lid member 82 will be described below. At first, the flange portion 82a and the truncated cone-shaped portion 82b are formed by press-forming a plate member made of metal. At this time, it is preferable to form the slit 82c simultaneously. Further, the tab 82d is pivotably moved starting from the end edge 82e such that the other end is lifted up. Thereby, a relatively large clearance CL is formed between the truncated cone-shaped portion 82b and the tab 82d, as illustrated in FIG. 2(a). Thereby, charging of working gas described later can be performed quickly.

Next, the stopper member 84 is arranged between the diaphragm 83 and the receiving member 86 with the outer circumference portions of each of the upper lid member 82, the diaphragm 83, and the receiving member 86 mutually superposed, and the outer circumference portions are subjected to circumferential welding by TIG welding, laser welding, plasma welding and the like and integrated thereby.

Next, regarding the upper lid member 82, a working gas is charged in a space surrounded by the upper lid member 82 and the diaphragm 83, which is called a pressure working chamber PO, through the clearance CL formed between the truncated cone-shaped portion 82b and the tab 82d (serving as a step of charging a working gas). Thereafter, as illustrated in FIG. 2(b), the tab 82d is pushed down such that it is flush with the upper surface of the truncated cone-shaped portion 82b, and a laser light LT is irradiated from a laser light source OS to an area in the vicinity along the slit 82c, such that a part of the upper lid member 82 constituting the vicinity, in other words, the material constituting the relevant area itself, hereinafter also simply referred to as the material, is melted. As illustrated in FIG. 2(c), the melted material flows to fill and seal the entire slit 82c before being solidified as a welded portion W serving as a sealed mark having an approximately C shape (serving as a step of filling the hole or slit). The welded portion W enables to prevent the working gas from leaking from the pressure working chamber PO. It is also possible to perform laser welding without pushing down the tab 82d.

When assembling the power element 8 formed as an assembly to the valve main body 2, the male screw portion 86e provided on the outer circumference of the lower end of the second cylindrical portion 86d of the receiving member 86 is screwed onto a female screw 2b formed on an inner circumference of a recessed portion 2a communicated with the return flow path 23 of the valve main body 2, as illustrated in FIG. 1. When the male screw portion 86e is screwed further onto the female screw 2b, a lower end of the receiving member 86 abuts against an upper end surface of an upper end surface of the valve main body 2. Thereby, the power element 8 can be fixed to the valve main body 2.

In this state, a seal SL interposed between the power element 8 and the valve main body 2 prevents leakage of the refrigerant through the recessed portion 2a in a state where the power element 8 is attached to the valve main body 2. In such a state, a lower space LS of the power element 8 communicates with the return flow path 23, in other words, becomes to have the same internal pressure.

### (Operation of Expansion Valve)

An operation example of the expansion valve 1 will be described with reference to FIG. 1. The refrigerant pressurized by the compressor 101 is liquefied in the condenser 102 and sent to the expansion valve 1. Further, the refrigerant subjected to adiabatic expansion in the expansion valve 1 is sent out to the evaporator 104 and performs heat exchange with air flowing in the circumference of the evaporator 104. The refrigerant returning from the evaporator 104 is returned toward the compressor 101 through the expansion valve 1, more specifically, through the return flow path 23. At this time, while passing through the evaporator 104, the fluid pressure in the second flow path 22 becomes greater than the fluid pressure in the return flow path 23.

The high-pressure refrigerant is supplied from the condenser 102 to the expansion valve 1. More specifically, the high-pressure refrigerant from the condenser 102 is supplied through the first flow path 21 into the valve chamber VS.

When the valve element 3 is seated on the valve seat 20, that is, in the non-communicated state, the flow of refrigerant sent out from the valve chamber VS via the valve communication hole 27, the intermediate chamber 221, and the second flow path 22 to the evaporator 104 is limited. Meanwhile, when the valve element 3 is left from the valve seat 20, that is, in the communicated state, the flow of the refrigerant sent out from the valve chamber VS via the valve communication hole 27, the intermediate chamber 221, and the second flow path 22 to the evaporator 104 is increased. The switching between the closed state and the opened state of the expansion valve 1 is performed by the working rod 5 connected to the power element 8 via the stopper member 84.

In FIG. 1, the pressure working chamber PO and the lower space LS divided by the diaphragm 83 are provided inside the power element 8. Therefore, when the working gas within the pressure working chamber PO is liquefied, the diaphragm 83 and the stopper member 84 are lifted, such that the working rod 5 moves to the upper direction according to the urging force of the coil spring 41. Meanwhile, in a state where the liquefied working gas is vaporized, the diaphragm 83 and the stopper member 84 are pushed downward, such that the working rod 5 moves to the lower direction. The switching between the opened state and the closed state of the expansion valve 1 is performed in this manner.

Further, the lower space LS of the power element 8 is communicated with the return flow path 23. Therefore, the volume of the working gas within the pressure working chamber PO is changed according to the temperature and pressure of the refrigerant flowing through the return flow path 23, and the working rod 5 is driven. In other words, according to the expansion valve 1 illustrated in FIG. 1, the amount of refrigerant supplied from the expansion valve 1 toward the evaporator 104 is adjusted automatically according to the temperature and pressure of the refrigerant returning from the evaporator 104 to the expansion valve 1.

According to the power element 8 of the present embodiment, working gas can be sealed in the upper lid member 82 without providing a plug member, such that the number of components can be reduced, the weight can be cut down, and the manufacturing process can be facilitated. Further, since the center portion of the truncated cone-shaped portion 82b of the upper lid member 82 is flat, water is prevented from being pooled in that area, such that there is no need to use an anticorrosion material and costs can be cut down even further.

### (Modified Example 1 of First Embodiment)

FIG. 3B is a plan view of an enlarged view of a top portion of a power element according to a modified example, illustrating a state immediately prior to welding. According to the present modified example, a slit 82Ac having a shape like a symbol formed by removing a horizontal center bar from "E" when viewed in an axial direction about the axis L, or a U-shape when viewed in an axial direction about the axis L is formed to a flat center portion of a truncated cone-shaped portion 82Ab on an upper lid member, and a rectangular tab 82Ad is formed at a center surrounded by the slit 82Ac. The tab 82Ad is connected to the truncated cone-shaped portion 82Ab via an end edge 82Ae illustrated by a dotted line that connects both ends of the slit 82Ac, and in the state prior to assembly, the tab 82Ad is in an erected state folded up at the end edge 82Ae with respect to the truncated cone-shaped portion 82Ab. The other configurations including the diaphragm 83, the stopper member 84, and the receiving member 86 are similar to the embodiment described above, such that the same descriptions will not be repeated. According to the present modified example 1, the material in a vicinity of the slit 82Ac is heated and melted to seal the slit 82Ac, such that a sealed mark having a shape like a symbol formed by removing a horizontal center bar from "E" when viewed in an axial direction about the axis L, or a U-shape when viewed in the axial direction of the expansion valve will be formed.

### (Modified Example 2 of First Embodiment)

FIG. 3C is a plan view of an enlarged view of a top portion of a power element according to a modified example, illustrating a state immediately prior to welding. According to the present modified example, a slit 82Bc which has a partial shape of a trapezoid when viewed in an axial direction of the expansion valve about the axis L, or a V-shape when viewed in the axial direction of the expansion valve, is formed to a flat center portion of a truncated cone-shaped portion 82Bb on an upper lid member, and a rectangular tab 82Bd is formed at a center surrounded by the slit 82Bc. The tab 82Bd is connected to the truncated cone-shaped portion 82Bb via an end edge 82Be illustrated by a dotted line that connects both ends of the slit 82Bc, and in the state prior to assembly, the tab 82Bd is in an erected state folded up at the end edge 82Be with respect to the truncated cone-shaped portion 82Bb. The other configurations including the diaphragm 83, the stopper member 84, and the receiving member 86 are similar to the embodiment described above, such that the same descriptions will not be repeated. According to the present modified example 2, the material of a vicinity of the slit 82Bc is heated and melted to seal the slit 82Bc, such that a sealed mark having a partial shape of a trapezoid when viewed in the axial direction of the expansion valve, or a V-shape when viewed in the axial direction of the expansion valve, will be formed. In any of the embodiments and modified examples, the tab can have various shapes.

### (Second Embodiment)

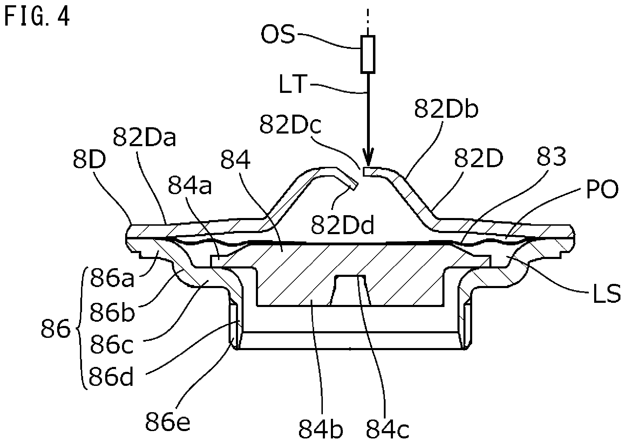

FIG. 4 is a cross-sectional view illustrating a portion of a manufacturing process of a power element 8D according to a second embodiment. As illustrated in FIG. 4, an upper lid member 82D of the power element 8D includes a flange portion 82Da on an outer circumference side and a truncated cone-shaped portion 82Db at a center. In the state prior to assembly, similar to the first embodiment, a slit 82Dc having an arc-shape, i.e., C-shape, is formed on a flat center portion of the truncated cone-shaped portion 82Db, and a circular tab 82Dd is formed at a center thereof. However, in the state prior to assembly, the tab 82Dd is pushed in with respect to the truncated cone-shaped portion 82Db, and is inclined toward the inner side of the upper lid member 82D. The other configurations including the diaphragm 83, the stopper member 84, and the receiving member 86 are similar to the embodiment described above, such that the same descriptions will not be repeated.

A laser light LT is irradiated from a laser light source OS to an area in the vicinity of the edge of the slit 82Dc, such that the material constituting the upper lid member 82D in the vicinity of the slit 82Dc is melted, and the melted material fills and seals the entire slit 82Dc before being solidified and forms an arc-shaped, or C-shaped, sealed mark. During the melting process, spattered particles may scatter from the welded portion. According to the present embodiment, as illustrated in FIG. 4, since the tab 82Dd is arranged in an opposed manner to the welding portion in the area below the slit 82Dc, the spattered matter scattered from the welding portion is received by the tab 82Dd such that entry thereof into the interior of the upper lid member 82D is suppressed.

### (Third Embodiment)

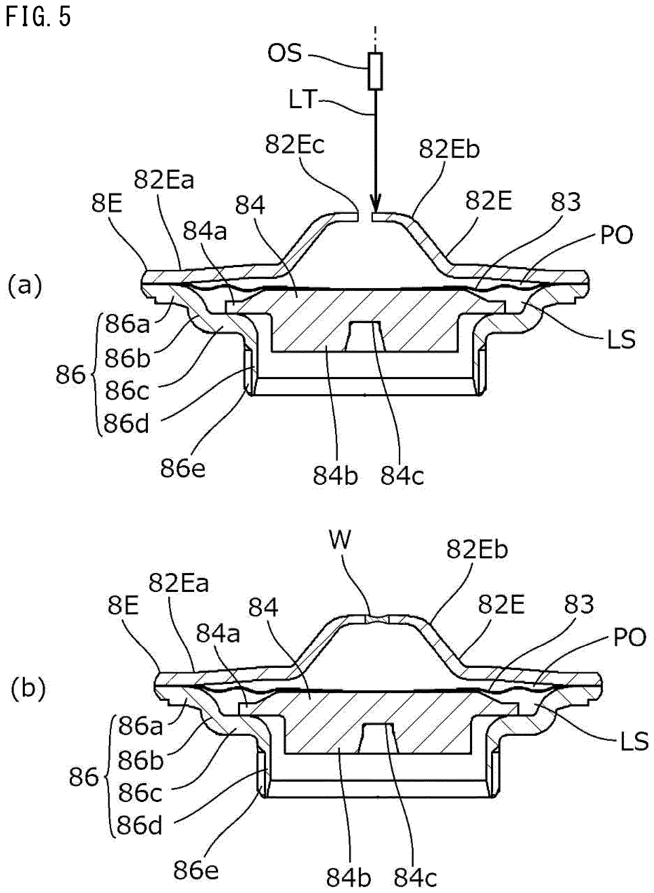

FIG. 5 is a cross-sectional view illustrating a portion of a manufacturing process of a power element 8E according to a third embodiment. As illustrated in FIG. 5(a), an upper lid member 82E of the power element 8E includes a flange portion 82Ea on an outer circumference side and a truncated cone-shaped portion 82Eb at a center. In the state prior to assembly, a small hole 82Ec having an inner diameter of 0.5 mm or smaller is formed on a flat center portion of the truncated cone-shaped portion 82Eb. The other configurations including the diaphragm 83, the stopper member 84, and the receiving member 86 are similar to the embodiment described above, such that the same descriptions will not be repeated.

A laser light LT is irradiated from a laser light source OS to a surrounding area of the small hole 82Ec to melt the material, and the melted material fills and seals the entire small hole 82Ec before being solidified to form a welded portion W serving as a sealed mark, as illustrated in FIG. 5(b). The welded portion W prevents the working gas from leaking from the pressure working chamber PO. The flowing of the heated and melted material to the small hole 82Ec and solidifying thereof can be confirmed by cutting and observing the cross section of the welded portion W of the power element, such that it can be specified directly according to the structure.

### (Modified Example 1 of Third Embodiment)

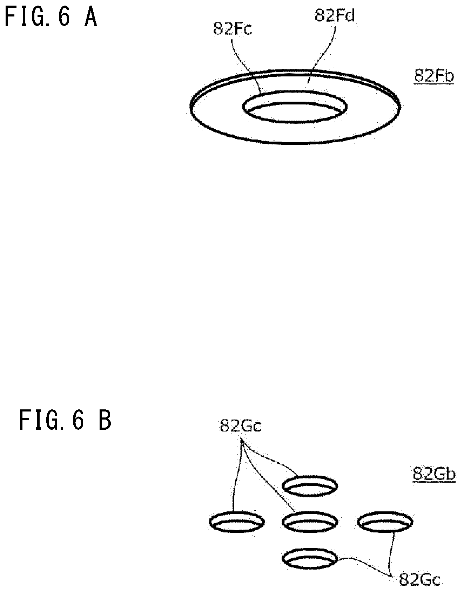

FIG. 6A is a plan view of an enlarged view of a top portion of a power element according to a modified example, illustrating a state immediately prior to welding. According to the present modified example, a stepped portion 82Fd that is one step lowered from an upper surface of a truncated cone-shaped portion 82Fb is formed at a circumference of a small hole 82Fc on a flat center portion of a truncated cone-shaped portion 82Fb of an upper lid member. The thinned stepped portion 82Fd is preferably formed by press-forming. The other configurations including the diaphragm 83, the stopper member 84, and the receiving member 86 are similar to the embodiment described above, such that the same descriptions will not be repeated.

According to the present modified example, with reference to FIG. 5, a volume of material that is melted to fill the small hole 82Fc by irradiating the laser light LT from the laser light source OS to the thinned stepped portion 82Fd is reduced, such that rapid welding is realized.

### (Modified Example 2 of Third Embodiment)

FIG. 6B is a plan view of an enlarged view of a top portion of a power element according to a modified example, illustrating a state immediately prior to welding. According to the invention, a plurality of pores 82Gc that have a smaller diameter than the small hole 82Ec are formed on a flat center portion of a truncated cone-shaped portion 82Gb of an upper lid member. The other configurations including the diaphragm 83, the stopper member 84, and the receiving member 86 are similar to the embodiment described above, such that the same descriptions will not be repeated.

According to the invention, the working gas is charged quickly through the plurality of pores 82Gc, and with reference to FIG. 5, the pores 82Gc having relatively small cross-sectional areas is filled quickly by irradiating the laser light LT from the laser light source OS to areas between adjacent pores 82Gc.

### (Fourth Embodiment)

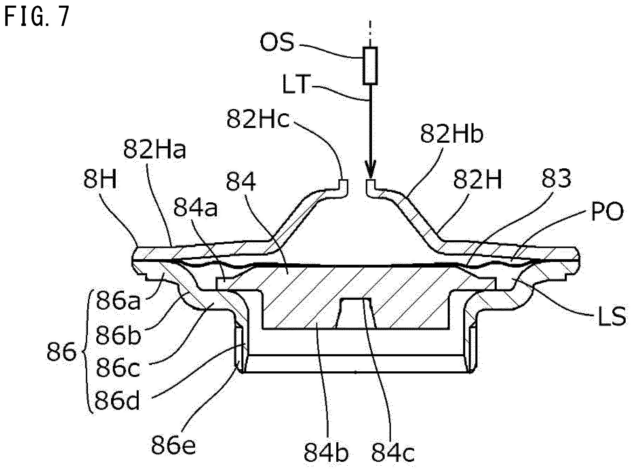

FIG. 7 is a cross-sectional view illustrating a portion of a manufacturing process of a power element 8H according to a fourth embodiment. As illustrated in FIG. 7, an upper lid member 82H of the power element 8H includes a flange portion 82Ha on an outer circumference side and a truncated cone-shaped portion 82Hb at a center. In the state prior to assembly, a hollow cylindrical portion 82Hc arranged upward is formed on a flat center portion of the truncated cone-shaped portion 82Hb. A center of the cylindrical portion 82Hc constitutes a hole through which the working gas is charged. In other words, the cylindrical portion 82 is a portion in the vicinity of the hole through which the working gas is charged. The other configurations including the diaphragm 83, the stopper member 84, and the receiving member 86 are similar to the embodiment described above, such that the same descriptions will not be repeated.

A laser light LT is irradiated from a laser light source OS to an upper end of the cylindrical portion 82Gc to melt the material, and the melted material fills and seals the inner side of the cylindrical portion 82Hc before being solidified to form a sealed mark. The material melted from the upper end of the cylindrical portion 82Hc can efficiently fill the inner side of the cylindrical portion 82Hc.

### (Fifth Embodiment)

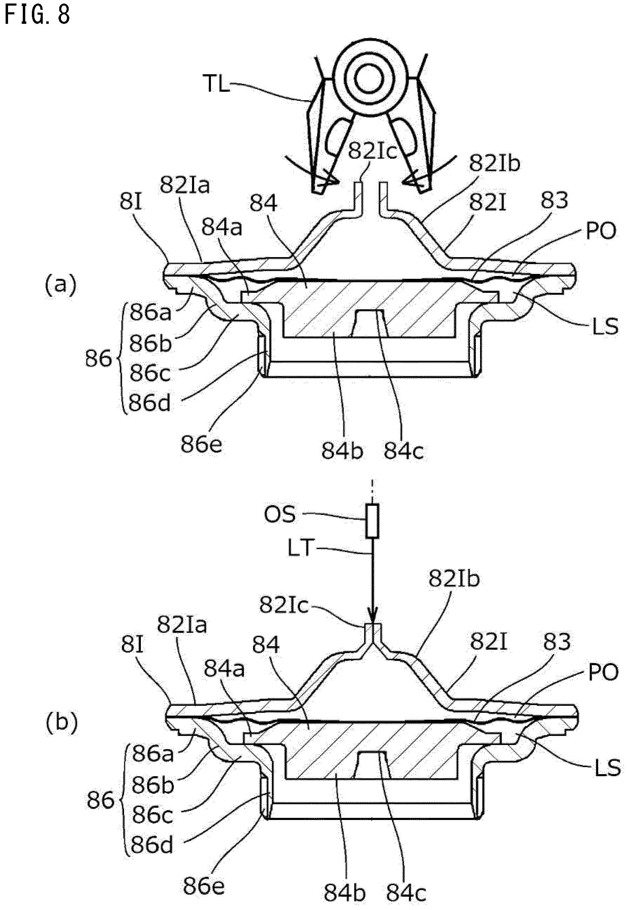

FIG. 8 is a cross-sectional view illustrating a portion of a manufacturing process of a power element 8I according to a fifth embodiment. As illustrated in FIG. 8, an upper lid member 82I of the power element 8I includes a flange portion 82Ia on an outer circumference side and a truncated cone-shaped portion 82Ib at a center. In the state prior to assembly, a hollow cylindrical portion 82Ic arranged upward is formed on a flat center portion of the truncated cone-shaped portion 82Ib. A center of the cylindrical portion 82Ic constitutes a hole through which the working gas is charged. In other words, the cylindrical portion 82Ic is a vicinity portion of the hole through which the working gas is charged. The other configurations including the diaphragm 83, the stopper member 84, and the receiving member 86 are similar to the embodiment described above, such that the same descriptions will not be repeated.

In the present embodiment, after charging the working gas in the pressure working chamber PO, the cylindrical portion 82Ic is squeezed (or crushed) by nipping the cylindrical portion 82Ic from both sides as illustrated in FIG. 8(a) using a tool TL equipped with a pair of finger-shaped pressing portions. Then, as illustrated in FIG. 8(b), the laser light LT is irradiated from the laser light source OS to the upper end of the squeezed cylindrical portion 82Ic and the material is melted to seal the squeezed hole. By squeezing the cylindrical portion 82Ic from both sides using the tool TL prior to irradiating the laser light LT, an opening area, i.e., cross-sectional area of the hole, of the cylindrical portion 82Ic can be reduced, such that the irradiation time of the laser light can be shortened.

### (Sixth Embodiment)

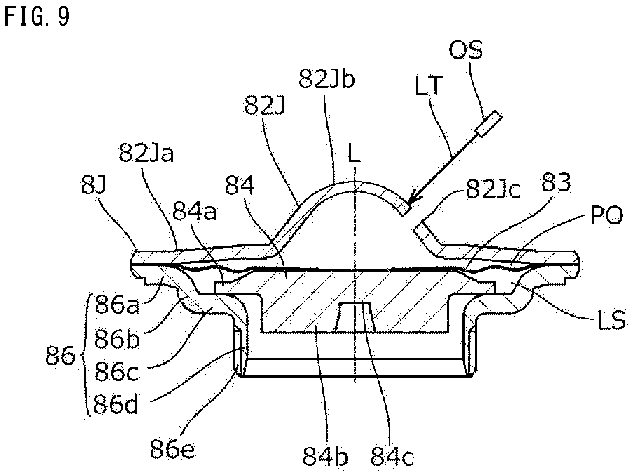

FIG. 9 is a cross-sectional view illustrating a portion of a manufacturing process of a power element 8J according to a sixth embodiment. As illustrated in FIG. 9, an upper lid member 82J of the power element 8J includes a flange portion 82Ja on an outer circumference side and a dome-shaped portion 82Jb at a center. In the state prior to assembly, a small hole 82Jc is formed on a side surface, i.e., inclined surface inclined with respect to the axis L, of the dome-shaped portion 82Jb. The other configurations including the diaphragm 83, the stopper member 84, and the receiving member 86 are similar to the embodiment described above, such that the same descriptions will not be repeated.

In a state where the laser light LT from the laser light source OS is irradiated obliquely to the vicinity of the upper portion of the small hole 82Jc to melt the material, the melted material flows downward by gravity to fill and seal the entire small hole 82Jc before being solidified to form a sealed mark. According to the present embodiment, since the top portion of the dome-shaped portion 82Jb is spherical, even if dew condensation water drips from a piping arranged above the expansion valve, the water flows down along the smooth top portion of the dome-shaped portion 82Jb and further flows along the flange portion 82Ja inclined toward the outer circumference edge before dropping down to the outer side of the power element 8J. Thereby, the pooling of dew condensation water can be prevented. Even according to the embodiments described above, the dome-shaped portion can be provided instead of the truncated cone-shaped portion.

### (Seventh Embodiment)

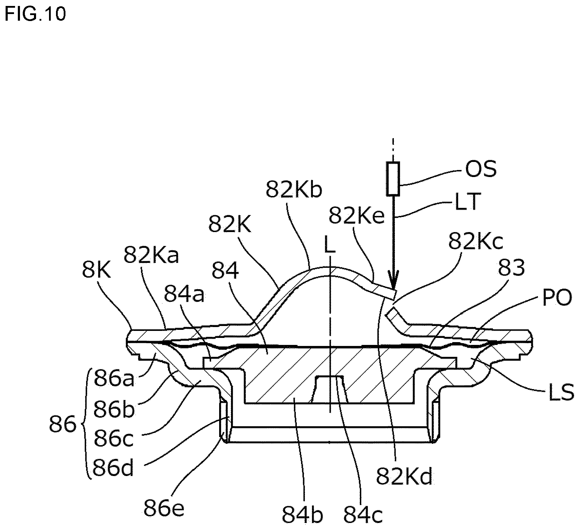

FIG. 10 is a cross-sectional view illustrating a portion of a manufacturing process of a power element 8K according to a seventh embodiment. As illustrated in FIG. 10, an upper lid member 82K of the power element 8K includes a flange portion 82Ka on an outer circumference side and a dome-shaped portion 82Kb at a center. In the state prior to assembly, a slit 82Kc and a tab 82Kd as illustrated in FIGs. 3A to 3C are formed on the side surface of the dome-shaped portion 82Kb. An end edge 82Ke of the tab 82Kd is arranged above the slit 82Kc, and a lower end side of the tab 82Kd is cut and erected from the dome-shaped portion 82Kb. The other configurations including the diaphragm 83, the stopper member 84, and the receiving member 86 are similar to the embodiment described above, such that the same descriptions will not be repeated.

In a state where the laser light LT from the laser light source OS is irradiated obliquely to the tab 82Kd to melt the material, the melted material flows and suspends downward by gravity to fill and seal the entire slit 82Kc before being solidified to form a sealed mark.

### [Explanation of References]

1: Expansion valve
2: Valve main body
3: Valve element
4: Urging device
5: Working rod
6: Ring spring
8, 8D, 8E, 8H, 8I, 8J, 8K: Power element
20: Valve seat
21: First flow path
22: Second flow path
23: Return flow path
27: Valve communication hole
41: Coil spring
42: Valve element support
43: Spring receiving member
100: Refrigerant circulation system
101: Compressor
102: Condenser
104: Evaporator
VS: Valve chamber

## Claims

1. A method for manufacturing a power element for a thermal expansion valve including an upper lid member, a receiving member, and a diaphragm interposed between the upper lid member and the receiving member, the method for manufacturing the power element comprising:
a step of charging a working gas in an area between the upper lid member and the diaphragm via a plurality of holes formed on the upper lid member; and
a step of heating and melting a material of the upper lid member constituting a vicinity between adjacent holes so as to fill the plurality of holes by the melted material.

2. The method for manufacturing a power element according to claim 1,
wherein the plurality of holes are formed on an inclined surface that is inclined with respect to an axis of the upper lid member, and
wherein a melted material flows by gravity to fill the plurality of holes.

3. The method for manufacturing a power element according to any one of claims 1 to 2,
wherein a laser light is irradiated to heat and melt a material in the vicinity of the plurality of holes.

4. A power element for a thermal expansion valve comprising:
an upper lid member formed of a metal plate;
a diaphragm having an outer circumference of the diaphragm welded to an outer circumference of the upper lid member; and
a working gas charged in an internal space surrounded by the upper lid member and the diaphragm,
**characterized by**,
the upper lid member comprising a sealed mark formed by sealing a plurality of holes that communicate the internal space with an exterior, and
the sealed mark is formed by filling the plurality of holes by heating and melting a material of the upper lid member constituting a vicinity between adjacent holes, which is flown and solidified.

5. A thermal expansion valve comprising the power element according to claim 4.

## Patentansprüche

1. Ein Verfahren zur Herstellung eines Leistungselements für ein Thermoexpansionsventil, das ein oberes Deckelteil, ein Aufnahmeteil und eine Membran, die zwischen dem oberen Deckelteil und dem Aufnahmeteil angeordnet ist, umfasst, wobei das Verfahren zur Herstellung des Leistungselements folgende Schritte umfasst:
einen Schritt, in dem ein Arbeitsgas in einen Bereich zwischen dem oberen Deckelteil und der Membran über mehrere auf dem oberen Deckelteil gebildete Löcher eingefüllt wird; und
einen Schritt, in dem ein Material des oberen Deckelteils in der Nähe zwischen benachbarten Löchern erhitzt und geschmolzen wird, um die mehreren Löcher mit dem geschmolzenen Material zu verschließen.

2. Das Verfahren zur Herstellung eines Leistungselements nach Anspruch 1, wobei die mehreren Löcher auf einer geneigten Fläche gebildet sind, die in Bezug auf die Achse des oberen Deckelteils geneigt ist, und wobei das geschmolzene Material durch die Schwerkraft fließt, um die mehreren Löcher zu verschließen.

3. Das Verfahren zur Herstellung eines Leistungselements nach einem der Ansprüche 1 oder 2, wobei ein Laserlicht verwendet wird, um das Material in der Nähe der mehreren Löcher zu erhitzen und zu schmelzen.

4. Ein Leistungselement für ein Thermoexpansionsventil, umfassend:
ein aus einer Metallplatte gebildetes oberes Deckelteil;
eine Membran, deren Außenumfang an den Außenumfang des oberen Deckelteils geschweißt ist; und
ein Arbeitsgas, das in einem Innenraum eingefüllt ist, der vom oberen Deckelteil und der Membran umschlossen wird,
**gekennzeichnet dadurch, dass** das obere Deckelteil eine Verschlussmarkierung aufweist, die durch das Verschließen mehrerer Löcher, die den Innenraum mit dem Äußeren verbinden, gebildet wird,
und dass die Verschlussmarkierung durch das Erhitzen und Schmelzen eines Materials des oberen Deckelteils in der Nähe zwischen benachbarten Löchern gebildet wird, welches fließt und erstarrt.

5. Ein Thermoexpansionsventil, das das Leistungselement nach Anspruch 4 umfasst.

## Revendications

1. Procédé de fabrication d'un élément de puissance pour une soupape de détente thermique incluant un élément de couvercle supérieur, un élément de réception et une membrane intercalée entre l'élément de couvercle supérieur et l'élément de réception, le procédé de fabrication de l'élément de puissance comportant :
une étape consistant à charger un gaz de travail dans une zone entre l'élément de couvercle supérieur et la membrane via une pluralité de trous formés sur l'élément de couvercle supérieur ; et
une étape consistant à chauffer et faire fondre une matière de l'élément de couvercle supérieur constituant un voisinage entre des trous adjacents de manière à remplir la pluralité de trous par la matière fondue.

2. Procédé de fabrication d'un élément de puissance selon la revendication 1,
dans lequel les trous de la pluralité de trous sont formés sur une surface inclinée qui est inclinée par rapport à un axe de l'élément de couvercle supérieur, et
dans lequel une matière fondue s'écoule par gravité pour remplir la pluralité de trous.

3. Procédé de fabrication d'un élément de puissance selon l'une quelconque des revendications 1 à 2,
dans lequel une lumière laser est projetée pour chauffer et faire fondre une matière au voisinage de la pluralité de trous.

4. Élément de puissance pour une soupape de détente thermique comportant :
un élément de couvercle supérieur formé d'une plaque métallique ;
une membrane ayant une circonférence extérieure de la membrane soudée à une circonférence extérieure de l'élément de couvercle supérieur ; et
un gaz de travail chargé dans un espace interne entouré par l'élément de couvercle supérieur et la membrane,
**caractérisé en ce que**
l'élément de couvercle supérieur comporte une marque scellée formée en scellant une pluralité de trous qui font communiquer l'espace interne avec un extérieur, et
la marque scellée est formée en remplissant la pluralité de trous en chauffant et en faisant fondre une matière de l'élément de couvercle supérieur constituant un voisinage entre des trous adjacents, qui a coulé et est solidifiée.

5. Soupape de détente thermique comportant l'élément de puissance selon la revendication 4.
